# EUROPÄISCHE PATENTANMELDUNG

(11) **EP 4 834 705 A1**
(43) Veröffentlichungstag der Anmeldung: **04.11.2026**
(21) Anmeldenummer: 25173612.0
(22) Anmeldetag: 30.04.2025
(51) Int. Cl.: B61L 27/50, B61L 27/70, H04J 3/06, H04J 3/14, B61L 27/53, B61L 27/30

(54) **EINRICHTUNG UND VERFAHREN ZUM RECHNERGESTÜTZTEN ÜBERWACHEN ZWEIER ZEITBASEN VON ZWEI KOMMUNIKATIONSEINRICHTUNGEN**

(71) Anmelder: Siemens Mobility GmbH, 80997 München (DE)
(72) Erfinder: de Stefano, Ernesto, 38126 Braunschweig (DE); Braband, Jens, 38106 Braunschweig (DE)
(74) Vertreter: Siemens Patent Attorneys

(57) **Zusammenfassung**

Gegenstand der Erfindung ist ein Verfahren (zusätzlich eine Einrichtung und ein Computerprogramm) zum rechnergestützten Überwachen einer ersten Zeitbasis einer ersten Kommunikationseinrichtung und einer zweiten Zeitbasis einer zweiten Kommunikationseinrichtung. In einem ersten Ablauf wird in Messschritten (n) der Christian Algorithmus zur Berechnung von Zeitversatzintervallen eines Zeitversatzes zwischen den Zeitbasen angewandt. In einem zweiten Ablauf wird wiederholt für einen bestimmten Messschritt (n) und bei fortschreitenden Messschritten (n+x) für einen fortgeschrittenen späteren Messschritt (n+x) von den zugehörigen Zeitversatzintervallen (COW) die niedrigste obere Schranke als obere Schranke eines resultierendes Zeitversatzintervalls (RCOW) festgesetzt wird und die höchste untere Schranke als untere Schranke des resultierenden Zeitversatzintervalls (RCOW) festgesetzt. In einem dritten Ablauf besteht das Überwachen darin, zu prüfen, ob eine Spanne des resultierenden Zeitintervalls (RCOW) gegen Null strebt und/oder zu prüfen, ob die Spanne des resultierenden Zeitintervalls (RCOW) gegen einen Grenzwert ungleich Null strebt.

## Beschreibung

Die Erfindung betrifft ein Verfahren zum rechnergestützten Überwachen einer ersten Zeitbasis einer ersten Kommunikationseinrichtung und einer zweiten Zeitbasis einer zweiten Kommunikationseinrichtung. Außerdem betrifft die Erfindung eine Rechenumgebung mit einer ersten Kommunikationseinrichtung, aufweisend eine erste Zeitbasis mit einer zweiten Kommunikationseinrichtung, aufweisend eine zweite Zeitbasis und mit einer Schnittstelle zum Aufbau einer Kommunikationsverbindung zwischen der ersten Kommunikationseinrichtung und der zweiten Kommunikationseinrichtung. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Ein grundlegendes Verfahren zur Synchronisation von Zeitbasen ist beispielsweise aus der Druckschrift "Probabilistic clock synchronization" (Flaviu, Christian, Distributed Computing (1989) 3:146-158) bekannt. Das dort beschriebene Verfahren soll im Folgenden als Christian Algorithmus bezeichnet werden und kann im Wesentlichen durch die eingangs angegebenen Verfahrensschritte in einem ersten Ablauf des Verfahrens beschrieben werden, wobei bei jedem Messschritt jeweils
- zu einem ersten Zeitpunkt, der auf die erste Zeitbasis bezogen ist, eine erste Nachricht von der ersten Kommunikationseinrichtung zu der zweiten Kommunikationseinrichtung gesendet wird,
- zu einem zweiten Zeitpunkt, der auf die zweite Zeitbasis bezogen ist, die erste Nachricht von der zweiten Kommunikationseinrichtung empfangen wird,
- zu einem dritten Zeitpunkt, der auf die zweite Zeitbasis bezogen ist, eine zweite Nachricht von der zweiten Kommunikationseinrichtung zu der ersten

Kommunikationseinrichtung gesendet wird, und
- zu einem vierten Zeitpunkt, der auf die erste Zeitbasis bezogen ist, die zweite Nachricht von der ersten Kommunikationseinrichtung empfangen wird,
- ein Zeitversatzintervall, in dem ein Zeitversatz zwischen der ersten Zeitbasis und der zweiten Zeitbasis liegen kann, aus dem ersten Zeitpunkt, dem zweiten Zeitpunkt, dem dritten Zeitpunkt und dem vierten Zeitpunkt bestimmt wird.

Ein Verfahren, welches den Christian Algorithmus zur Einschätzung eines Zeitversatzes zwischen zwei Zeitbasen nutzt, ist in der WO 2019/223951 A1 und in der WO 2022/263152 Al beschrieben. Mit Hilfe des Christian Algorithmus werden mehrere Zeitversatzintervalle bestimmt wobei mithilfe einer Extrapolation zeitlich aufeinanderfolgender Zeitversatzintervalle unter Berücksichtigung einer angenommenen Drift des Zeitversatzes Hilfsfenster für einen möglichen Zeitversatz gebildet werden können.

Sicherheitsargumentationen für verteilte, eine Rechenumgebung bildende Systeme stützen sich oft auf die Strategie der durch Redundanz erhöhten Ausfallsicherheit. Dabei ist auch eine zuverlässige Synchronisation der kommunizierenden Recheninstanzen der Rechenumgebung erforderlich. Wenn der sichere Zeitfortschritt von zwei oder mehr Zeitbasen abgeleitet wird, müssen diese physisch unabhängig voneinander sein. Das bedeutet, dass die Sicherheitsargumentationen darauf angewiesen sind, dass die Zeitbasen nicht von demselben physischen Gerät betrieben werden (ein physisches Gerät, das Zeitbasen betreibt, ist typischerweise ein Oszillator). Rechenumgebungen, die sich Plattformen mit virtuellen Recheninstanzen (virtuelle Maschinen, kurz VMs genannt) bedienen und insbesondere COTS-Hardware (COTS steht für Commercial-off-the-Shelf) verwenden, verlassen sich derzeit auf Bereitstellungs- und Wartungsregeln, die für deren Betreiber nur mit Aufwand einzuhalten sind. Dies liegt daran, dass die Betreiber in naher Zukunft zur Ausführung ihrer Anwendungen immer mehr VMs verwenden werden. Da VMs leicht auf andere physische Maschinen verschoben werden können, könnten Zeitbasen, die zunächst von unabhängigen physischen Geräten betrieben wurden, irgendwann unbeabsichtigt von demselben physischen Gerät betrieben werden, wenn VMs (versehentlich und möglicherweise automatisch) auf die gleiche physische Maschine verschoben werden.

Eine naheliegende Lösung wäre, die HW-ID (z.B. MAC-Adresse) der physischen Maschine, auf der die VM läuft, zu überwachen. Aber VMs können MAC-Adressen emulieren, um die Netzwerkintegrität aufrechtzuerhalten und sicherzustellen, dass VMs innerhalb virtueller und physischer Netzwerke effektiv kommunizieren können. Daher wäre es notwendig, mit zusätzlicher Software zu kommunizieren, die nativ auf dem Betriebssystem (außerhalb der VM) läuft und Zugriff auf die HW-ID der physischen Maschine hat, was mit einem bedeutenden Aufwand verbunden ist.

Der Erfindung liegt die Aufgabe zugrunde, ein Verfahren zum rechnergestützten Überwachen einer ersten Zeitbasis einer ersten Kommunikationseinrichtung und einer zweiten Zeitbasis einer zweiten Kommunikationseinrichtung anzugeben, mit dem zuverlässig und aufwandarm erkannt werden kann, ob die beiden Zeitbasen physisch auf derselben Hardware laufen. Außerdem besteht die Aufgabe der Erfindung darin, eine Rechenumgebung, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass in einem zweiten Ablauf wiederholt für einen bestimmten Messschritt (n) und bei fortschreitenden Messschritten (n+x) für einen fortgeschrittenen späteren Messschritt (n+x) von den zugehörigen Zeitversatzintervallen (COW)
- die niedrigste obere Schranke als obere Schranke eines resultierendes Zeitversatzintervalls (RCOW) festgesetzt wird und
- die höchste untere Schranke als untere Schranke des resultierenden Zeitversatzintervalls (RCOW) festgesetzt wird,
wobei in einem dritten Ablauf das Überwachen darin besteht, zu prüfen, ob eine Spanne des resultierenden Zeitintervalls (RCOW) gegen Null strebt und/oder zu prüfen, ob die Spanne des resultierenden Zeitintervalls (RCOW) gegen einen Grenzwert ungleich Null strebt.

Als erster Ablauf und zweiter Ablauf des erfindungsgemäßen Verfahrens sollen jeweils Abfolgen von Verfahrensschritten verstanden werden, die zur Erreichung der nachfolgend näher beschriebenen Bestimmungsergebnisse oder Berechnungsergebnisse rechnergestützt durchgeführt werden. Dabei werden die Ergebnisse des ersten Ablaufes im zweiten Ablauf benötigt. Dies bedeutet jedoch nicht, dass die Abläufe nacheinander durchgeführt werden müssen. Diese können auch parallel durchgeführt werden, wenn jeder Ablauf für sich wiederholt wird, wobei dann für den gerade durchgeführten zweiten Ablauf die Ergebnisse eines vorher abgeschlossenen ersten Ablaufes und für den gerade durchgeführten dritten Ablauf die Ergebnisse eines vorher abgeschlossenen zweiten Ablaufes verwendet werden.

Bei dem ersten Ablauf handelt es sich um eine Durchführung des eingangs beschriebenen Christian Algorithmus. Nach Bestimmung der genannten vier Zeitpunkte wird gemäß dem Christian Algorithmus das Zeitversatzintervall Δ(n), welches das Intervall für einen möglichen Zeitversatz angibt, innerhalb dessen der Zeitversatz, also der absolute Zeitunterschied zwischen der ersten Zeitbasis und der zweiten Zeitbasis aufgrund der gemessenen Zeitpunkte überhaupt nur liegen kann, bestimmt.

Bei dem Christian Algorithmus wird derart vorgegangen, dass der Zeitversatz Δ(n) aus dem ersten Zeitpunkt, dem zweiten Zeitpunkt, dem dritten Zeitpunkt und dem vierten Zeitpunkt berechnet wird. Ein maximal möglicher Fehler für den Zeitversatz e(n) kann aus dem ersten Zeitpunkt, dem zweiten Zeitpunkt, dem dritten Zeitpunkt und dem vierten Zeitpunkt berechnet werden und unter Berücksichtigung des maximal möglichen Fehlers eine obere Schranke und eine untere Schranke des Zeitversatzintervalls berechnet werden (hierzu im Folgenden noch mehr).

Der erste Ablauf enthält wiederholte Messschritte. Dies kann damit begründet werden, dass der erste Ablauf eine Grundlage für die Durchführung des zweiten Ablaufes bilden muss. In diesem müssen mehrfach je zumindest zwei Messschritte betrachtet werden, nämlich ein früherer Messschritt n und ein späterer Messschritt n+x. Dabei gibt n die Nummer des Messschrittes an und ist eine natürliche Zahl. Ein späterer Messschritt weist zu dem früheren Messschritt einen Abstand x in Messschritten auf, wobei es sich hierbei auch um eine natürliche Zahl handelt. Für einen benachbarten späteren Messschritt wäre somit x = 1.

Sind die Zeitversatzintervalle von einem früheren Messschritt und einem späteren Messschritt bekannt, so kann das hierdurch entstehende Zeitversatzintervall der betrachteten Messungen verwendet werden, um das resultierende Zeitversatzintervall bildlich gesprochen als Schnittmenge der betrachteten Zeitversatzintervalle in dem dritten Ablauf zu ermitteln.

Die im Folgenden beschriebene Erfindung bietet eine Lösung, die allein anhand des Fortschritts des Zeitversatzes der Zeitbasen, der anhand der Entwicklung des resultierenden Zeitversatzintervalls beurteilt wird, erkennen kann, ob sie von demselben physischen Gerät betrieben werden oder nicht.

Für die erfindungsgemäße Lösung ist folgende Überlegung ausschlaggebend. Physische Geräte, die verwendet werden, um Zeitbasen zu betreiben, weichen von der Nennfrequenz hauptsächlich aufgrund des Herstellungsprozesses, aber auch aufgrund von Alterung und Temperatur ab. Daher kann davon ausgegangen werden, dass Zeitbasen, die von verschiedenen physischen Geräten betrieben werden, nicht mit der gleichen Geschwindigkeit voranschreiten. Wenn die Werte der Zeitbasen nicht in Zeitabständen modifiziert werden, um diesen Effekt zu kompensieren, indem sie beispielsweise mit einer gemeinsamen Zeitquelle synchronisiert werden, wird sich der anfängliche Zeitversatz zwischen zwei Zeitbasen im Laufe der Zeit zwangsläufig ändern.

Der Versatz der Zeitbasen (kurz Zeitversatz) wird sich typischerweise linear über die Zeit ändern. Für einen in COTS-Hardware typischerweise verwendeten Oszillator als Zähler kann die Änderungsrate (im Folgenden auch Drift genannt) des Zählerversatzes bis zu 200 ppm (d.h. 200 Mikrosekunden pro Sekunde) betragen, wenn der andere Zähler von einer perfekten Uhr angetrieben würde. Wenn beide Zähler von in COTS-Hardware typischerweise verwendeten Oszillatoren angetrieben werden, kann die Änderungsrate des Zeitversatzes im fehlerfreien Zustand somit realistisch bis zu 400 ppm betragen. Wenn man von zwei Zeitbasen ausgeht, die nur eine Drift von 10 ppm in ihrem Zeitversatz aufweisen, hat sich ihr Zählerversatz nach einer Stunde um 36 Millisekunden erhöht. Wenn zwei Zeitgeber vom selben Oszillator angetrieben würden, wäre die tatsächliche Änderungsrate des Zählerversatzes jedoch immer null. Die Strategie besteht erfindungsgemäß nun darin, den Zählerversatz (d.h. ein Zeitversatzfenster namens COW, das durch eine obere und untere Grenze gebildet wird) regelmäßig zu messen.

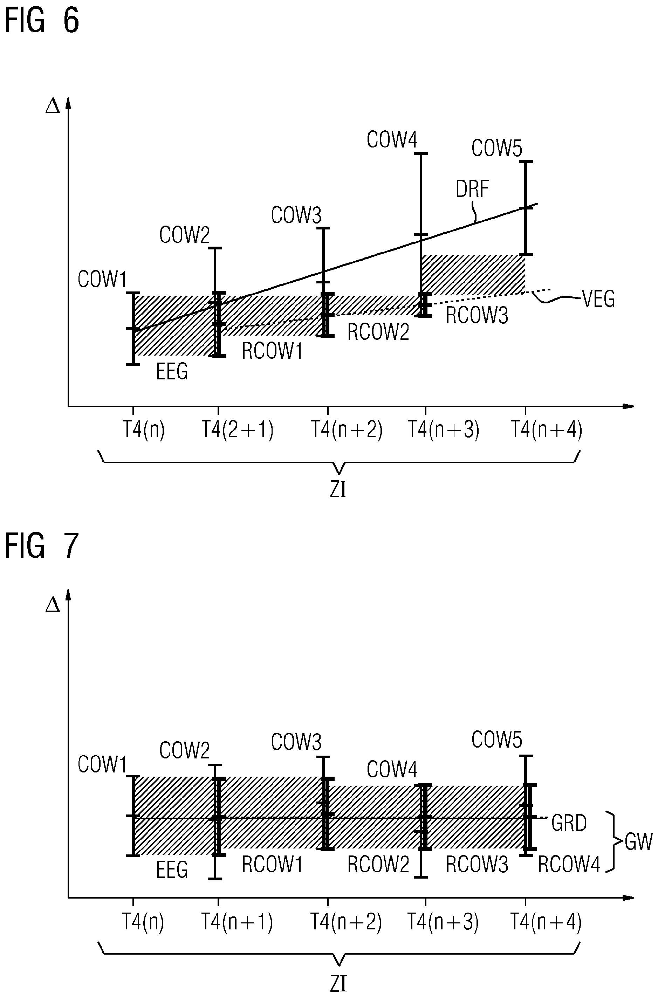

Wenn die Zeitbasen nicht vom selben Oszillator betrieben werden, werden die "geschnittenen Fenster" (siehe Figur 6), die die resultierenden Zeitversatzintervalle darstellen, im Laufe der Zeit kleiner (d.h. sie konvergieren gegen eine Tiefe von null). Wenn die Zeitgeber stattdessen vom selben Oszillator angetrieben werden, werden die "geschnittenen Fenster" (siehe Figur 7) schnell auf eine kleinstmögliche Rundlaufzeit in ihrer Tiefe konvergieren. Ab diesem Zeitpunkt werden die Schnittmengen auf der Grundlage neuer Messungen nicht mehr zu einem kleineren "Fenster" führen. Wenn nach einer charakteristischen (konfigurierbaren) Anzahl von Messungen das Fenster nicht mehr kleiner geworden ist, wird der Verlust unabhängiger Zeitquellen für die Zeitbasen als erkannt angesehen.

Um das Verfahren erfindungsgemäß durchzuführen, reicht es grundsätzlich, das Streben der Spanne des resultierenden Zeitversatzintervalls gegen null oder gegen einen Grenzwert zu überwachen. Wenn bei diesen Alternativen nach einer bestimmten Zeit, die als Zeitspanne oder eine Anzahl von Messungen vorgegeben werden kann, der eine oder alternativ der andere Grenzwert erreicht wurde, liegt ein eindeutiges Ergebnis vor. Wird null oder alternativ dieser Grenzwert nicht erreicht, kann auf das jeweils gegenteilige Ergebnis geschlossen werden. Besonders vorteilhaft ist es jedoch, das Streben der Spanne des resultierenden Zeitversatzintervalls gegen Null und gleichzeitig gegen den Grenzwert zu überwachen. In diesem Fall ist das Verfahren vorteilhaft besonders robust, da beispielsweise in einer vorgegebenen Zeitspanne das eine oder das andere Ergebnis erzielt werden sollte. Wenn keines der beiden Ergebnisse erzielt werden kann, kann hier auf einen anderen vorliegenden (unbekannten) Fehler geschlossen werden.

Das Verfahren ermöglicht vorteilhaft auch den Betrieb von sicherheitsrelevanten Kommunikationseinrichtungen, deren synchrone Kommunikation für das betreffende Verfahren Voraussetzung ist, mit COTS (commercial of the shelf) Komponenten als Zeitbasis. Als Beispiel für eine Anwendung kann die Kommunikationstechnik im Bahnbetrieb genannt werden, die einem hohen Sicherheitsstandard genügen muss.

Rechnergestützt oder computerimplementiert ist eine Vorrichtung, wenn diese eine Rechenumgebung aufweist, oder ein Verfahren, wenn eine Rechenumgebung mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Eine Cloud (auch als Rechnerwolke oder Datenwolke bezeichnet) ist eine Rechenumgebung für ein sog. Cloud-Computing. Gemeint ist eine IT-Infrastruktur, welche über Schnittstellen eines Netzwerks wie dem Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können auf computerlesbaren Speichern in Form von Arbeitsspeichern (engl. Random-Access Memory, RAM) oder Datenspeichern (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein und dienen einem Austausch von Daten vorzugsweise in Form von digitalen Datensätzen oder analogen Signalen.

Gemäß einer Ausgestaltung der Erfindung ist vorgesehen, dass in dem zweiten Ablauf wiederholt nicht nur für den bestimmten Messschritt (n) und bei fortschreitenden Messschritten (n+x) für den fortgeschrittenen späteren Messschritt (n+x), sondern auch für alle zwischen dem bestimmten Messschritt (n) und dem späteren Messschritt (n+x) liegenden Messschritte (n+1 ... n+x-1) von den zugehörigen Zeitversatzintervallen (COW)
- die niedrigste obere Schranke als obere Schranke eines resultierendes Zeitversatzintervalls (RCOW) festgesetzt wird und
- die höchste untere Schranke als untere Schranke des resultierenden Zeitversatzintervalls (RCOW) festgesetzt wird.

Die Berücksichtigung aller Messschritte, die zwischen dem bestimmten Messschritt und dem spätesten der fortgeschrittenen Messschritt liegen, macht vorteilhaft das Verfahren robuster gegen auftretende Messungenauigkeiten. Dies ermöglicht es überdies, die Entwicklung der Spanne des resultierenden Zeitintervalls besser nachzuverfolgen. Insbesondere kann das Streben der Spanne des resultierenden Zeitversatzintervalls gegen null bzw. gegen den Grenzwert schneller festgestellt werden und ermöglicht es dadurch, schneller zu reagieren, wenn zwei Zeitbasen denselben physischen Zeitgeber verwenden.

Gemäß einer Ausgestaltung der Erfindung ist vorgesehen, dass das Prüfen, ob die Spanne des resultierenden Zeitintervalls (RCOW) gegen einen Grenzwert ungleich Null strebt, darin besteht, zu prüfen, ob sich die Spanne des resultierenden Zeitversatzintervalls bei wiederholtem Festsetzen der oberen und unteren Schranke des resultierenden Zeitintervalls auf Dauer nicht verringert.

In diesem Falle muss der Grenzwert ungleich Null (im Folgenden kurz als Grenzwert bezeichnet, wobei mit diesem Grenzwert nicht Null gemeint ist), der erreicht werden soll, nicht bekannt sein, denn die Tatsache, dass irgendein Grenzwert erreicht wird, kann zuverlässig als Beweis dafür angesehen werden, dass beide untersuchten Zeitbasen durch denselben physischen Zeitgeber realisiert sind.

In der Natur des Grenzwertes liegt es begründet, dass eine Prüfung erfolgen kann, ob die Spanne des resultierenden Zeitintervalls sich auf Dauer nicht mehr ändert. Die Erkenntnis, dass funktionsbedingt entweder ein solcher Grenzwert existiert und ermittelt wird (und sich überdies auch deutlich von Null unterscheiden muss) oder Null ermittelt wird und diese Werte somit im Rahmen realisierbarer Messgenauigkeiten messtechnisch als eindeutiges Unterscheidungskriterium (d. h. Null gegenüber Grenzwert) verwendet werden können, ist wesentlich gewesen, um das Verfahren in der erfindungsgemäßen Weise auszugestalten.

Es ist bei der technischen Umsetzung selbstverständlich, dass Messungenauigkeiten berücksichtigt werden müssen. Anders ausgedrückt bedeutet technisch gesehen das Kriterium, dass sich die Spanne auf Dauer nicht mehr ändert und somit bei dem Grenzwert oder bei null liegt, dass die Messwerte innerhalb eines den Grenzwert oder null enthaltenden (die zu erwartenden Messfehler berücksichtigenden) Toleranzbereich auf Dauer nicht verlassen.

Gemäß einer Ausgestaltung der Erfindung ist vorgesehen, dass für den Fall, dass die Spanne des resultierenden Zeitintervalls (RCOW) gegen einen Grenzwert strebt, ein Fehlersignal generiert wird.

Hierbei handelt es sich um den Fall, der als Beweis für den Zugriff der beiden Zeitbasen auf denselben Zeitgeber gilt und deswegen angezeigt werden muss. Das Fehlersignal kann für unterschiedliche Zwecke verwendet werden. Es kann automatisch ausgewertet werden und eine Reaktion in der überwachten Anlage oder Rechenumgebung auslösen. Es kann aber auch ausgegeben werden, um rechnergestützt oder durch einen Menschen außerhalb der Anlage oder Rechenumgebung ausgewertet werden zu können. Fällt der eine Zeitgeber aus, kann nicht auf den (nicht vorhandenen) zweiten Zeitgeber ausgewichen werden und der laufende technische Prozess muss gestoppt werden. Um die Redundanz wieder herzustellen, kann eine geeignete technische Maßnahme (z. B. Neustart oder Austausch des ausgefallenen Zeitgebers) aus dem Fehlersignal abgeleitet werden. Bilden die Zeitgeber ein 2oo3-System, bei dem drei Zeitgeber jeweils paarweise nach dem erfindungsgemäßen Verfahren abgeglichen werden, kann das Verfahren sogar weitergeführt werden, solange das resultierende Zeitintervall bei wenigstens einem der drei untersuchten Paare der Zeitgeber gegen Null strebt. Denn dies kann als Nachweis gewertet werden, dass es zumindest dieses funktionierende Paar von die Zeitbasen realisierenden Zeitgebern gibt.

Gemäß einer Ausgestaltung der Erfindung ist vorgesehen, dass eine Anzahl (h) von aufeinanderfolgenden Durchführungen für das Prüfen im dritten Ablauf festgelegt wird, bei denen eine Stagnation der Spanne des resultierenden Zeitversatzintervalls (RCOW) akzeptiert wird, bevor das Fehlersignal generiert wird.

Die Anzahl h kann aus einer von der Anlage oder der Rechenumgebung benötigten und daher nicht zu überschreitenden Fehlererkenungszeit (auch Fault Detection Time, kurz FDT genannt) und einer Zykluszeit C für die wiederholten Messungen abgeleitet werden zu: $h = FDT / C$

Um die Robustheit des Verfahrens gegenüber falschen Bewertungen zu erhöhen, kann die Zykluszeit C reduziert werden, damit mehr Messungen h während der FDT durchgeführt werden können.

Es ist bei der technischen Umsetzung selbstverständlich, dass auch hier Messungenauigkeiten berücksichtigt werden müssen. Anders ausgedrückt bedeutet technisch gesehen das Kriterium, dass sich die Spanne auf Dauer nicht mehr ändert und somit bei dem Grenzwert liegt, bedeutet, dass die Messwerte innerhalb eines den Grenzwert enthaltenden (die zu erwartenden Messfehler berücksichtigenden) Toleranzbereich auf Dauer nicht verlassen.

Gemäß einer Ausgestaltung der Erfindung ist vorgesehen, dass der Zeitversatz bei einem Messschritt n auf Grundlage der Sendezeit der ersten Nachricht als Zeitdifferenz zwischen dem ersten Zeitpunkt und dem zweiten Zeitpunkt und der Sendezeit der zweiten Nachricht als Zeitdifferenz zwischen dem dritten Zeitpunkt und dem vierten Zeitpunkt berechnet wird.

Insbesondere kann die Differenz der beiden genannten Zeitdifferenzen zur Beurteilung eines potentiellen Zeitversatz der beiden Zeitbasen verwendet werden. Dahinter steht die Überlegung, dass ein Zeitversatz zu einer Verschiebung der gemessenen Zeiten im Vergleich zu den realen Zeiten führt. Damit wird die gemessene Sendezeit der einen Nachricht kürzer und der anderen Nachricht länger, wobei es sich bei den Nachrichten um die erste Nachricht und die zweite Nachricht im ersten Ablauf des Verfahrens handelt. Insofern wirkt sich der Zeitversatz doppelt auf die gemessenen Sendezeiten aus.

Es kann beispielsweise vorgesehen werden, dass der Zeitversatz Δ(n) bei einem Messschritt n berechnet wird nach der Formel: $Δ \left(n\right) = \left(\left(T2\left(n\right)-T1\left(n\right)\right)-\left(T4\left(n\right)-T3\left(n\right)\right)\right) / 2$ (1)

Dass das Ergebnis (im Nenner) durch zwei geteilt wird, trägt dem Umstand Rechnung, dass sich, wie bereits erwähnt, der Zeitversatz doppelt auf die gemessenen Sendezeiten auswirkt.

Allerdings ist es nicht erforderlich, das Ergebnis durch zwei zu teilen, wenn dies im weiteren Verlauf des Verfahrens berücksichtigt wird (hierzu im Folgenden noch mehr).

Gemäß einer Ausgestaltung der Erfindung ist vorgesehen, dass ein maximal möglicher Fehler für den Zeitversatz bei einem Messschritt n unter Berücksichtigung einer in der ersten Kommunikationseinrichtung gemessenen Nachrichtenlaufzeit als Zeitdifferenz zwischen dem ersten Zeitpunkt und dem vierten Zeitpunkt und einer in der zweiten Kommunikationseinrichtung gemessenen Reaktionszeit als Zeitdifferenz zwischen dem zweiten Zeitpunkt und dem dritten Zeitpunkt berechnet wird.

Bei der gemessenen Nachrichtenlaufzeit handelt es sich nicht um die tatsächliche Nachrichtenlaufzeit. Dies kann damit begründet werden, dass die Messung mit Messfehlern behaftet ist. Der größte Messfehler liegt darin, dass die Zeitdifferenz zwischen dem ersten Zeitpunkt und dem vierten Zeitpunkt nicht berücksichtigt, dass in der zweiten Kommunikationseinrichtung eine Reaktionszeit vom Empfangen der ersten Nachricht bis zum Versenden der zweiten Nachricht vorliegt.

Der letztgenannte Messfehler lässt sich jedoch leicht ermitteln. Er besteht in der gemessenen Reaktionszeit, die als Zeitdifferenz zwischen dem zweiten Zeitpunkt und dem dritten Zeitpunkt berechnet werden kann und deswegen die gemessene Nachrichtenlaufzeit um die gemessene Reaktionszeit verringert. Wird daher die gemessene Reaktionszeit von der gemessenen Nachrichtenlaufzeit abgezogen, wird das Ergebnis eine bessere Nehrung an die tatsächliche Nachrichtenlaufzeit darstellen.

Gleichzeitig bildet das Ergebnis ein Maß für den maximal möglichen Fehler, wenn man die Überlegung zugrunde legt, dass die Signallaufzeiten aufgrund von Unregelmäßigkeiten in der Übertragungsstrecke schwanken können. Diese Schwankungen sind groß im Vergleich zur Messgenauigkeit bei der Ermittlung der betreffenden zu messenden Zeitpunkte. Deswegen kann ein Messfehler auf Grund von Schwankungen bei der Übertragung, die unter Berücksichtigung der Reaktionszeit der zweiten Kommunikationseinrichtung bestimmt werden, hinreichend genau abgeschätzt werden.

Es kann beispielsweise vorgesehen werde, dass der maximal mögliche Fehler e(n) Des betreffenden Messschrittes n berechnet wird nach der Formel: $e \left(n\right) = \left(\left(T4\left(n\right)-T1\left(n\right)\right)-\left(T3\left(n\right)-T2\left(n\right)\right)\right) / 2$ (2)

Die Zeitdifferenz zwischen dem vierten Zeitpunkt und dem ersten Zeitpunkt gibt die gemessene Signallaufzeit an. Von dieser abgezogen werden kann die Reaktionszeit der zweiten Kommunikationseinrichtung, ermittelt durch die Zeitdifferenz zwischen dem dritten Zeitpunkt und dem zweiten Zeitpunkt. Da es sich um zwei Übertragungen handelt, kann das Ergebnis (Nenner) durch zwei geteilt werden, um den maximal möglichen Fehler pro Übertragung zu bekommen.

Alternativ kann ein Teilen durch zwei unterbleiben, wenn dies im weiteren Verfahren bei der Berechnung berücksichtigt wird. Der maximal mögliche Fehler kann somit auch allein mit dem oben genannten Nenner berechnet werden.

Mit anderen Worten kann festgestellt werden, dass der tatsächliche Zeitversatz δ(n) eine Messschrittes n zuverlässig in folgendem Intervall liegt. $Δ u \left(n\right) = Δ \left(n\right) - e \left(n\right) \leq δ \left(n\right) \leq Δ \left(n\right) + e \left(n\right) = Δ o \left(n\right)$ (3) wobei
*Δ*u(n) die untere Schranke des Zeitversatzintervalls des Messschrittes,
*Δ*o(n) die obere Schranke des Zeitversatzintervalls des Messschrittes
ist.

Werden die Formeln (1) und (2) in die Formel (3) eingesetzt, so erhält man die obere Schranke und die untere Schranke des Zeitversatzintervalls für den tatsächlichen Zeitversatz δ(n): $Δ u \left(n\right) = T 3 \left(n\right) - T 4 \left(n\right) \leq δ \left(n\right) \leq T 2 \left(n\right) - T 1 \left(n\right) = Δ o \left(n\right)$ (4)

Gemäß einer Ausgestaltung der Erfindung ist vorgesehen, dass die untere Schranke des Zeitversatzintervalls *Δ*u(n) des Messschrittes n berechnet wird nach der Formel: $Δ u \left(n\right) = T 3 \left(n\right) - T 4 \left(n\right)$ und die obere Schranke des Zeitversatzintervalls *Δ*o(n) des Messschrittes (n) berechnet wird nach der Formel: $Δ o \left(n\right) = T 2 \left(n\right) - T 1 \left(n\right) .$

Wie oben bereits erläutert, werden bei diesen Formeln, die Teile der Formel (4) darstellen, sowohl die Messungen für den Zeitversatz Δ(*n*) als auch die Abschätzung des Fehlers *e*(*n*) berücksichtigt.

Gemäß einer Ausgestaltung der Erfindung ist vorgesehen, dass eine Zeitdifferenz zwischen dem früheren Messschritt und dem späteren Messschritt n+x berechnet wird, wobei zur Ermittlung der Zeitdifferenz die gemessenen ersten Zeitpunkte oder die gemessenen zweiten Zeitpunkte oder die gemessenen dritten Zeitpunkte oder die gemessenen vierten Zeitpunkte des früheren Messschrittes und des späteren Messschrittes berücksichtigt werden.

Die Zeitdifferenz gibt ein Maß für den Zeitraum an, welcher zwischen dem früheren Messschritt und dem späteren Messschritt liegt. Diese Zeitdifferenz ist zur Ermittlung der Drift auf der Grundlage der ermittelten Zeitversätze erforderlich, da die Drift definiert ist als die zeitliche Änderung des Zeitversatzes. Dabei ist es vorteilhaft, Zeitpunkte zu verwenden, die im Rahmen der Ermittlung der Messergebnisse der Messschritte ohnehin zur Verfügung stehen. Dabei werden jeweils vergleichbare Zeitpunkte herangezogen, also beispielsweise der vierte Zeitpunkt des früheren Messschrittes und der vierte Zeitpunkt des späteren Messschrittes (Analoges gilt für die ersten, zweiten und dritten Zeitpunkte).

Gemäß einer Ausgestaltung der Erfindung ist vorgesehen, dass für den zweiten Ablauf ein Zeitintervall festgelegt wird, in dem alle zu betrachtenden früheren Messschritte und späteren Messschritte liegen müssen.

Eine Auswertung kann jeweils nach Ablauf des Zeitintervalls oder wiederholt auch schon während des Ablaufes des Zeitintervalls mit den bereits verfügbaren Messungen erfolgen, indem der zweite Ablauf durchgeführt wird. Bei der Bestimmung der Länge des Zeitintervalls kann berücksichtigt werden, dass für die Durchführung des zweiten Ablaufes die folgenden Bedingungen zu erfüllen sind.

Das Zeitintervall muss lang genug sein, damit sich eine Drift des Zeitversatzes messtechnisch durch Annäherung des resultierenden Zeitversatzintervalls an Null oder die ausbleibende Drift durch Annäherung an die kleinstmögliche Rundlaufzeit mit hoher Wahrscheinlichkeit feststellen lässt. Wird schon während des Ablaufes des Zeitintervalls ausgewertet, so ist kann die vorzeitige Erfüllung einer der beiden vorgenannten Bedingungen, als Abbuchkriterium für die Auswertung verwendet werden. Somit wird nicht das Erreichen des Endes des Zeitintervalls abgewartet, sondern ein neues Zeitintervall mit einer neuen Auswertung gestartet.

Die genannte Aufgabe wird alternativ mit dem eingangs angegebenen Anspruchsgegenstand (Rechenumgebung) erfindungsgemäß auch dadurch gelöst, dass die Rechenumgebung eingerichtet ist, ein Verfahren zum rechnergestützten Überwachen gemäß einem der vorgenannten Ansprüche durchzuführen.

Als Rechenumgebung im Sinne der Erfindung ist eine technische Anlage zu verstehen, bei der ein Datenaustausch zwischen unterschiedlichen Kommunikationseinrichtungen der Anlage erforderlich ist. Dies ist insbesondere der Fall, wenn die Anlage mehrere Computer aufweist, die in der Art betrieben werden müssen, dass ein synchronisierter Datenaustausch über die erste Kommunikationseinrichtung und die zweite Kommunikationseinrichtung erforderlich ist.

Gemäß einer Ausgestaltung der Erfindung ist vorgesehen, dass die Schnittstelle zum Aufbau der Kommunikationsverbindung durch eine Cloud bereitgestellt wird.

Die Anlage kann in diesem Falle aus einzelnen technischen Komponenten bestehen, deren Kommunikationsverbindung als Service beispielsweise durch einen Cloud Anbieter gewährleistet ist. Bei einer Kommunikation über eine Cloud können die Übertragungszeiten schwanken, so dass das erfindungsgemäße Verfahren besonders vorteilhaft Verwendung finden kann, um diese Schwankungen durch Bildung von resultierenden Zeitversatzfenstern in der erfindungsgemäßen Weise zu überwachen.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Gemäß einer Ausgestaltung der Erfindung ist vorgesehen, dass die Anlage eine bahntechnische Anlage ist.

Wie bereits erwähnt, profitieren bahntechnische Anlagen wie zum Beispiel Stellwerke in besonderem Maße von der Anwendung des erfindungsgemäßen Verfahrens, da eine zuverlässige Überwachung bezüglich einer ungewollten Verwendung derselben Hardwarekomponente für zwei Zeitbasen erfolgen kann.

Mit der Anlage lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Anlage.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Merkmalen der Erfindung kombinierbar.

Es zeigen:
Figur 1 ein Ausführungsbeispiel der erfindungsbemäßen Anlage mit ihren Wirkzusammenhängen schematisch,
Figur 2 ein Ausführungsbeispiel einer Computer-Infrastruktur der Kommunikationseinrichtungen in der Anlage gemäß Figur 1 mit je einem Computer als Blockschaltbild aus Funktionseinheiten, wobei Programmmodule abgearbeitet werden, die jeweils in einem oder mehreren Prozessoren ablaufen können und wobei die Schnittstellen demgemäß softwaretechnisch oder hardwaretechnisch ausgeführt sein können,
Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind,
Figur 4 schematisch die Durchführung des Christian Algorithmus mit zwei um einen Zeitversatz δ verschobenen Zeitbasen im ersten Ablauf,
Figur 5 die Ermittlung von Zeitversatzintervallen in einer Darstellung des Zeitversatzes Δ über der Zeit t im zweiten Ablauf,
Figuren 6 und 7 die Ermittlung von resultierenden Zeitversatzintervallen aus einzelnen Zeitversatzintervallen über jeweiligen Paaren von Messungen n, n+x in einem dritten Ablauf, wobei in Figur 6 der Fall dargestellt ist, dass die beiden Zeitbasen zwei unterschiedliche Zeitgeber nutzen und in Figur 7 der Fall dargestellt ist, dass die beiden Zeitbasen dieselben Zeitgeber benutzen.

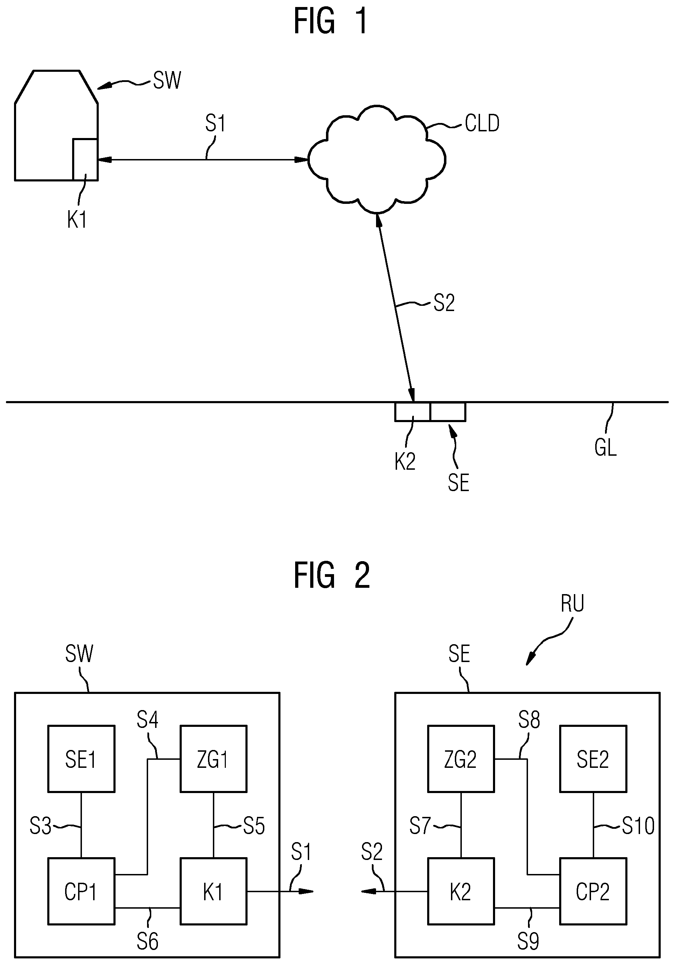

Figur 1 zeigt schematisch eine Anlage in einer Bahnumgebung, in der ein Ausführungsbeispiel des erfindungsgemäßen Verfahrens ablaufen kann. Dargestellt ist ein Gleis GL, in das eine streckenseitige Einrichtung SE eingebaut ist. Diese stellt eine zweite Kommunikationseinrichtung K2 zur Verfügung, die über eine zweite Schnittstelle S2 mit einer Cloud CLD verbunden ist. Eine andere Komponente wird durch ein Stellwerk SW zur Verfügung gestellt. Dieses weist eine erste Kommunikationseinrichtung K1 auf, welche über eine erste Schnittstelle S1 ebenfalls mit der Cloud CLD verbunden ist.

Über die Cloud CLD können somit die erste Kommunikationseinrichtung K1 und die zweite Kommunikationseinrichtung K2 unter Nutzung der ersten Schnittstelle S1 und der zweiten Schnittstelle S2 miteinander kommunizieren. Möglich ist es auch, dass eine direkte Kommunikation zwischen der ersten Kommunikationseinrichtung K1 und der zweiten Kommunikationseinrichtung K2 kabelgebunden oder über eine Funkschnittstelle gewährleistet ist (nicht dargestellt). Auch können die Bahnkomponenten, die miteinander kommunizieren, auch durch andere als die dargestellten Bahnkomponenten des Stellwerks SW und der streckenseitigen Einrichtung SE gewährleistet sein.

Das Stellwerk SW und die streckenseitige Einrichtung SE als Rechenumgebung RU sind mit ihren Funktionskomponenten in Figur 2 schematisch als Blockschaltbild dargestellt. Das Stellwerk SW weist einen ersten Computer CP1 auf, der über eine dritte Schnittstelle S3 mit einer ersten Speichereinrichtung SE1 verbunden ist. Außerdem ist ein die erste Zeitbasis ZB1 bildender erster Zeitgeber ZG1 vorgesehen, der über eine vierte Schnittstelle S4 mit dem Computer CP1 und über eine fünfte Schnittstelle S5 mit der ersten Kommunikationseinrichtung K1 verbunden ist. Ergebnisse einer auf dem Stellwerk laufenden Anwendung, die durch den ersten Computer CP1 berechnet werden, können überdies über eine sechste Schnittstelle S6 an die erste Kommunikationseinrichtung K1 übermittelt werden.

Die erste Kommunikationseinrichtung K1 dient zur Kommunikation mit der zweiten Kommunikationseinrichtung K2 in der streckenseitigen Einrichtung SE. Dies ist zu Figur 1 beschrieben worden. Die zweite Kommunikationseinrichtung K2 ist über eine siebte Schnittstelle S7 mit einer zweiten Zeitbasis ZB2 verbunden. Über die erste Zeitbasis ZB1 und die zweite Zeitbasis ZB2 ist eine synchronisierte Kommunikation der ersten Kommunikationseinrichtung K1 mit der zweiten Kommunikationseinrichtung K2 sichergestellt.

Ansonsten ist die Hardware-Infrastruktur der streckenseitigen Einrichtung SE analog zu derjenigen des Stellwerks SW aufgebaut, zumindest auf der in Figur 2 dargestellten abstrakten Ebene. D. h., dass ein die zweite Zeitbasis ZB2 bildender Zeitgeber ZG2 über eine achte Schnittstelle S8 mit einem zweiten Computer CP2 verbunden ist, der seinerseits über eine neunte Schnittstelle S9 mit der zweiten Kommunikationseinrichtung K2 verbunden ist. Auch der zweite Computer CP2 weist über eine zehnte Schnittstelle S10 eine Verbindung zu einer zweiten Speichereinrichtung SE2 auf.

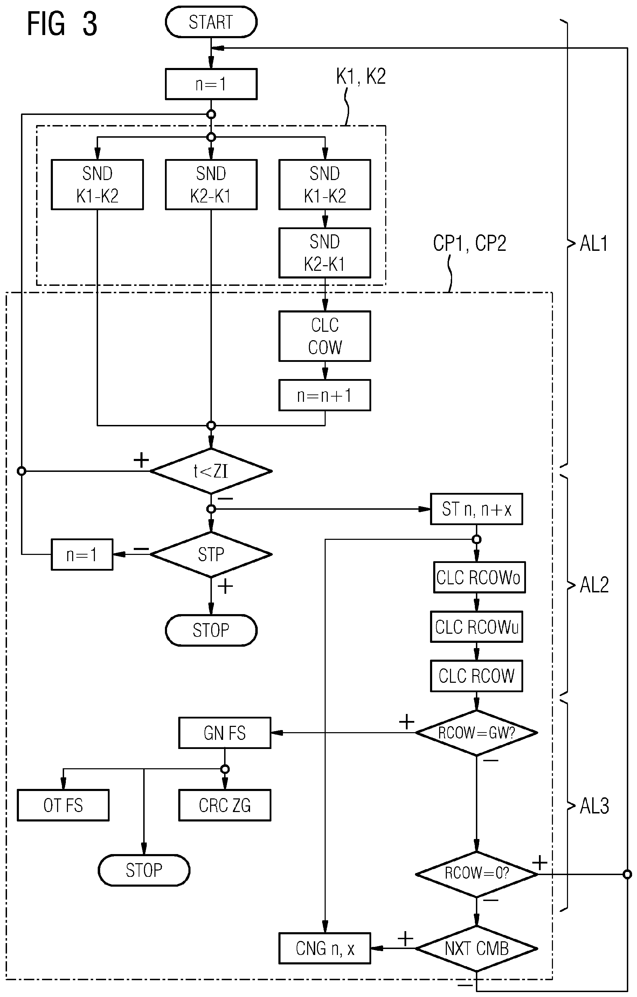

Anhand von Figur 3 kann das erfindungsgemäße Verfahren in einem Ablaufdiagramm nachvollzogen werden. Nach einem Start des Verfahrens wird eine Laufvariable n=1 gesetzt, da der erste Messschritt n durchgeführt wird. n steht somit für den Messschritt und ist beim ersten Durchlauf daher 1.

Je nach den Erfordernissen des ablaufenden Verfahrens können anschließend weitere Verfahrensschritte ausgewählt werden, wobei in Figur 3 nicht näher dargestellt ist, wie diese Erfordernisse ermittelt werden. Daher sind die drei möglichen Verfahrensschritte einfach parallel dargestellt. Danach kann ein Sendeschritt SND K1-K2 durchgeführt werden, bei dem eine Nachricht von der ersten Kommunikationseinrichtung K1 zu der zweiten Kommunikationseinrichtung K2 gesendet wird. Alternativ kann ein Sendeschritt SND K2-K1 durchgeführt werden, wenn eine Nachricht von der zweiten Kommunikationseinrichtung K2 zu der ersten Kommunikationseinrichtung K1 gesendet werden soll. Welche Richtung beim Senden erforderlich ist, hängt von den ablaufenden Prozessen der entsprechenden Applikationen ab. Das Senden von Nachrichten, die mit der Verarbeitung von Applikationen zu tun haben, werden vorrangig in Bezug zu der dritten Alternative durchgeführt, die im Folgenden beschrieben wird.

Danach wird, um einen ersten Ablauf AL1 des erfindungsgemäßen Verfahrens zu gewährleisten, zunächst ein Sendeschritt SND K1-K2 durchgeführt, um eine Nachricht von der ersten Kommunikationseinrichtung K1 zur zweiten Kommunikationseinrichtung K2 zu senden. Diese reagiert darauf, indem eine Nachricht in einem Sendeschritt SND K2-K1 von der zweiten Kommunikationseinrichtung K2 zur ersten Kommunikationseinrichtung K1 zurückgesendet wird. Wie im Folgenden noch näher erläutert wird, können diese beiden Sendeschritte herangezogen werden, um in einem Berechnungsschritt CLC COW für die beiden Sendeschritte ein Zeitversatzintervall COW zu berechnen, in dem ein möglicher tatsächlicher Zeitversatz Δ(n) liegen kann. Anschließend wird in einem Schritt n=n+1 die Laufvariable n um 1 erhöht.

Egal, welche der drei Alternativen durchgeführt wurde, wird in einem nachfolgenden Abfrageschritt t>ZI abgefragt, ob die abgelaufene Zeit t noch kleiner als ein definiertes Zeitintervall ZI (welches beispielsweise auf eine Minute festgelegt ist) noch nicht erreicht wurde. Ist dies der Fall, findet eine Wiederholung einer der drei oben genannten alternativen Verfahrensabläufe statt. Ist allerdings das Zeitintervall ZI abgelaufen, so ist der erste Ablauf AL1 abgeschlossen, wobei wiederholt die Verfahrensalternative zur Ermittlung eines Zeitversatzintervalls COW durchgeführt wurde.

Nach Abschluss des ersten Ablaufs AL1 wird in einem nächsten Abfrageschritt STP gefragt, ob das Verfahren zur Durchführung der Applikation insgesamt gestoppt werden soll. Ist dies der Fall, endet das Verfahren mit STOP. Ist dies nicht der Fall, wird die Laufvariable in einem Schritt n=1 wieder auf 1 gesetzt, sodass der erste Ablauf AL1 von Neuem beginnen kann.

Sobald der erste Ablauf AL1 abgeschlossen wurde, kann ein zweiter Ablauf AL2 begonnen werden. Bei diesem wird in einem Festsetzungsschritt ST der Messschritt 1 oder ein späterer Messschritt n (vorzugsweise der aktuelle Messschritt) ausgewählt. Durch Vergleich der Zeitversatzintervalle COW (hierzu im Folgenden noch mehr) kann in einem Berechnungsschritt CLC RCOWo eine obere Schranke und in einem Berechnungsschritt CLC RCOWu eine untere Schranke für ein resultierendes Zeitversatzintervall RCOW(n) ermittelt werden. Unter Berücksichtigung dieser beiden Schranken lässt sich in einem Berechnungsschritt CLC RCOW das resultierende Zeitversatzintervall RCOW(n) berechnen, welches für die weiteren Betrachtungen im dritten Ablauf AL3 von Bedeutung sind (auch hierzu im Folgenden noch mehr).

In einem Abfrageschritt RCOW=GW? wird im dritten Ablauf AL3 abgefragt, ob ein Grenzwert GW (siehe Figur 7) für die Entwicklung der Spanne der resultierenden Zeitintervalle RCOW erreicht wurde. Wenn ja, wird in einem Erzeugungsschritt GN FS ein Fehlersignal FS erzeugt. Ansonsten geht es weiter mit der nächsten Abfrage (sieh nachfolgend). Ein ermittelter Grenzwert GW (siehe Figur 7) kann im weiteren Verfahrensablauf zu unterschiedlichen Maßnahmen führen, von denen in Figur 3 alternativ zwei dargestellt sind. Beispielsweise kann ein Ausgabeschritt OT FS zur Ausgabe des Fehlersignal FS durchgeführt werden, der an einem nicht näher dargestellten Ausgabegerät angezeigt wird. Das Fehlersignal kann auch automatisch verarbeitet werden, um z. B. einen laufenden Prozess von Nutzprogrammen für die auf den Computern CP laufende (bahnspezifische) Applikation zu stoppen (STOP).

Alternativ ist es möglich, als Reaktion auf das Fehlersignal in einem Korrekturschritt CRC ZG die nichtgenutzte der beiden Zeitbasen ZB neu zu starten, und so die erste Zeitbasis ZB1 und die zweite Zeitbasis ZB2 wieder in den Prozess zu integrieren. Dabei kann die andere Zeitbasis als Referenz genutzt werden und die andere Zeitbasis an die als Referenz genutzte Zeitbasis angepasst werden.

In einem Abfrageschritt RCOW=0 wird abgefragt, ob die resultierenden Zeitintervalle zu null geworden sind (siehe Figur 6). Ist das der Fall, beginnt das Verfahren von neuem, um die Überwachung der Zeitbasen und Zeitgeber fortgesetzt zu überwachen. In einem weiteren Abfrageschritt NXT CMB wird ansonsten abgefragt, ob eine weitere Kombination von Messschritten untersucht werden soll. In diesem Fall wird in einem Änderungsschritt CNG n,x der frühere Messschritt n und ein anderer Abstand x zwischen dem früheren Messschritt n und dem späteren Messschritt n+x festgelegt. Das Verfahren des zweiten Ablaufes und des dritten Ablaufs, wie oben erläutert, kann erneut durchgeführt werden. Ansonsten beginnt das Verfahren von neuem, um die Überwachung der Zeitbasen und Zeitgeber fortgesetzt zu überwachen.

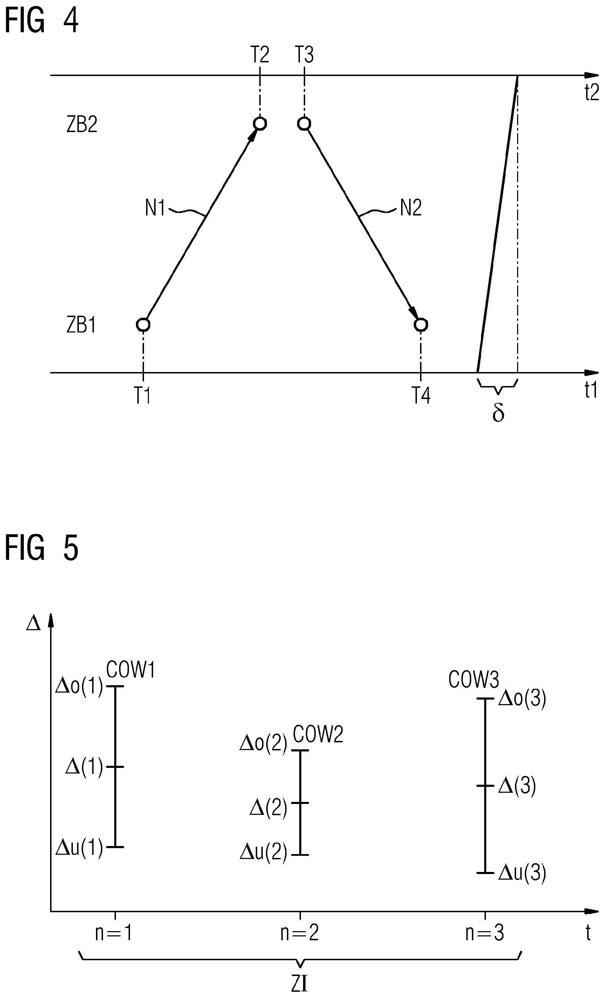

In Figur 4 ist schematisch dargestellt, wie ein erster Zeitpunkt T1, ein zweiter Zeitpunkt T2, ein dritter Zeitpunkt T3 und ein vierter Zeitpunkt T4 für den Christian Algorithmus gemessen werden. Die Zeitpunkte T1 ... T4 sind auf je einer ersten Zeitachse t1 für die erste Zeitbasis ZB1 und einer zweiten Zeitachse t2 für die zweite Zeitbasis ZB2 dargestellt. Dies macht deutlich, dass die genannten Zeitpunkte mit verschiedenen Zeitbasen ermittelt werden, zwischen denen ein real existierender Zeitversatz δ, der zwischen der ersten Zeitachse t1 und der zweiten Zeitachse t2 eingezeichnet ist, bestehen kann. Dieser ist jedoch nicht bekannt und wird unter Anwendung des Christian Algorithmus unter Berücksichtigung der vier genannten Zeitpunkte in der bereits beschriebenen Weise abgeschätzt.

Das Ergebnis mehrerer solcher Abschätzungen n = 1 ... 3 ist exemplarisch in Figur 5 dargestellt, wobei der Abstand der einzelnen Messungen n in Figur 5 auf einer Zeitachse t (x-Achse) dargestellt ist (in Wirklichkeit sind zur Durchführung des Verfahrens selbstverständlich mehr Messungen notwendig). Auf der y-Achse ist der berechnete Zeitversatz Δ dargestellt. Die Messungen n = 1 ... 3 liegen alle innerhalb eines festgelegten Zeitintervalls ZI. Die zu den einzelnen Messungen n gehörenden Zeitversatzintervalle COW1 ... COW3 werden alle gemäß Figur 4 nach dem Christian Algorithmus berechnet. Hierbei handelt es sich um Intervalle, innerhalb derer der tatsächlich vorliegende Zeitversatz Δ liegen muss. Diese weisen jeweils beispielsweise für die erste Messung (n = 1) eine untere Schranke Δu(1) und eine obere Schranke Δo(1) auf. Zusätzlich kann ein Mittelwert Δ(1) ermittelt werden, der für die hier vorgestellte weitere Berechnung allerdings nicht von Bedeutung ist. Dies gilt analog auch für das zweite Zeitversatzfenster COW2 und das dritte Zeitversatzfenster COW3. Weitere Zeitversatzfenster COW4 ... können innerhalb des Zeitintervalls ZI bestimmt werden (nicht dargestellt, siehe jedoch Figur 6 und Figur 7).

Durch Vergleich der Darstellungen in den Figuren 6 und 7 lässt sich der Unterschied erklären, der sich dadurch ergibt, ob die beiden erfindungsgemäß betrachteten Zeitbasen durch einen Zeitgeber oder durch zwei Zeitgeber verwirklicht werden. Dabei stellt Figur 6 den Normalzustand dar, dass, wie für den Verfahrensablauf eigentlich vorgesehen, zwei Zeitgeber zur Anwendung kommen. Der Verlauf gemäß Figur 7 ergibt sich demgegenüber für den Fall, dass beide Zeitbasen auf einem Zeitgeber laufen. Die Darstellung entspricht derjenigen gemäß Figur 5. Exemplarisch sind in den Figuren 6 und 7 jeweils fünf Zeitversatzintervalle dargestellt, wobei zur Kennzeichnung des Aufzeichnungszeitpunktes jeweils der vierte Zeitpunkt T4(n) verwendet wird.

Die Zeitversatz Intervalle COW1 ... COW5 sind in den Figuren 6 und 7 gekennzeichnet. Ebenso sind die resultierenden Zeitversatz Intervalle RCOW1 ... RCOW4 entsprechend gekennzeichnet. Soweit die Zeitversatz Intervalle und die resultierenden Zeitversatzintervalle paarweise dargestellt sind, liegt das betreffende Zeitversatzintervall jeweils links und das betreffende resultierende Zeitversatzintervall rechts. Das betreffende resultierende Zeitversatzintervall wird jeweils durch den in den Figuren 6 und 7 dargestellten Überlappungsbereich zwischen dem ersten Zeitversatz Intervall COW1 und dem jeweiligen Zeitversatzintervall COW(n+x) ermittelt, welches paarweise mit dem zugehörigen resultierenden Zeitversatz Intervall COW(n+x-1) dargestellt ist.

Weiterhin ist schraffiert eine Einengung EEG auf null in Figur 6 bzw. auf einen Grenzwert GW in Figur 7 innerhalb des Zeitintervalls ZI, welches kleiner oder gleich einer geforderten Fault Detection Time der Anlage sein muss, dargestellt. Für die Ermittlung des ersten resultierenden Zeitversatzintervalls RCOW1 entspricht die Einengung genau dem Überschneidungsbereich der beiden betrachteten Zeitversatzintervalle COW1 und COW2. Durch nachfolgende Ermittlungsschritte für resultierende Zeitversatzintervalle RCOW(1+ x) gilt, dass diese die Beurteilung des Überwachens lediglich weiter einschränken, jedoch nicht aufweiten können.

Für Figur 6 bei der Unterbringung der Zeitbasen in unterschiedlichen Zeitgebern gilt, dass aufgrund der zwangsläufig auftretenden resultierenden Drift DRF zwischen den Zeitbasen eine Einengung EEG mit einer Verengungsgeschwindigkeit VEG dazu führt, dass die resultierenden Zeitversatzintervalle innerhalb des Zeitintervalls ZI zu null werden. Hiermit wird der Nachweis erbracht, dass die beiden Zeitbasen in unterschiedlichen Zeitgebern untergebracht sind.

Für Figur 7 bei der Unterbringung der Zeitbasen in demselben Zeitgeber gilt, dass keine Drift erfolgen kann, was durch die gerade GRD angedeutet wird. Daher pendelt sich die Einengung EEG auf einen Grenzwert GW ein der durch die Schwankungen bei der Ermittlung der resultierenden Zeitversatzintervalle RCOW(n+X) nicht weiter eingeengt wird. Hiermit wird der Nachweis erbracht, dass die beiden Zeitbasen in demselben Zeitgeber untergebracht sind.

### Bezugszeichenliste

- GL: Gleis
- SW: Stellwerk
- SE: streckenseitige Einrichtung
- CLD: Cloud
- RU: Rechenumgebung
- ZI: Zeitintervall
- ZG1, ZG2: Zeitgeber
- ZB1, ZB2: Zeitbasis
- SE1, SE2: Speichereinrichtung
- CP1, CP2: Computer
- S1 ... S10: Schnittstelle
- K1, K2: Kommunikationseinrichtung

- T1 ... T4: Zeitpunkt
- N1, N2: Nachricht
- n: Messschritte
- x: Abstand zwischen Messschritten
- t: Zeit
- Δ: Zeitversatz
- COW1...5: Zeitversatzintervall
- DRF: Drift
- VEG: Verengungsgeschwindigkeit
- EEG: Einengung
- RCOW1...4: resultierende Zeitversatzintervalle
- GRD: Gerade
- GW: Grenzwert
- Δo: obere Schranke des Zeitversatzintervalls
- Δu: untere Schranke des Zeitversatzintervalls
- Δ: tatsächlicher Zeitversatz

## Patentansprüche

1. Verfahren zum rechnergestützten Überwachen einer ersten Zeitbasis (ZB1) einer ersten Kommunikationseinrichtung und einer zweiten Zeitbasis (ZB2) einer zweiten Kommunikationseinrichtung,
wobei in einem ersten Ablauf wiederholt Messschritte (n; n+1; n+2 ...) durchgeführt werden,
wobei bei jedem Messschritt jeweils
• zu einem ersten Zeitpunkt (T1), der auf die erste Zeitbasis (ZB1) bezogen ist, eine erste Nachricht (N1) von der ersten Kommunikationseinrichtung (K1) zu der zweiten Kommunikationseinrichtung (K2) gesendet wird,
• zu einem zweiten Zeitpunkt (T2), der auf die zweite Zeitbasis (ZB2) bezogen ist, die erste Nachricht (N1) von der zweiten Kommunikationseinrichtung (K2) empfangen wird,
• zu einem dritten Zeitpunkt (T3), der auf die zweite Zeitbasis (ZB2) bezogen ist, eine zweite Nachricht (N2) von der zweiten Kommunikationseinrichtung (K2) zu der ersten Kommunikationseinrichtung (K1) gesendet wird, und
• zu einem vierten Zeitpunkt (T4), der auf die erste Zeitbasis (ZB1) bezogen ist, die zweite Nachricht (N2) von der ersten Kommunikationseinrichtung (K1) empfangen wird,
• ein Zeitversatzintervall (COW), in dem ein Zeitversatz zwischen der ersten Zeitbasis und der zweiten Zeitbasis liegen kann, aus dem ersten Zeitpunkt, dem zweiten Zeitpunkt, dem dritten Zeitpunkt und dem vierten Zeitpunkt bestimmt wird,
**dadurch gekennzeichnet, dass**
in einem zweiten Ablauf wiederholt für einen bestimmten Messschritt (n) und bei fortschreitenden Messschritten (n+x) für einen fortgeschrittenen späteren Messschritt (n+x) von den zugehörigen Zeitversatzintervallen (COW)
• die niedrigste obere Schranke als obere Schranke eines resultierendes Zeitversatzintervalls (RCOW) festgesetzt wird und
• die höchste untere Schranke als untere Schranke des resultierenden Zeitversatzintervalls (RCOW) festgesetzt wird,
wobei in einem dritten Ablauf das Überwachen darin besteht, zu prüfen, ob eine Spanne des resultierenden Zeitintervalls (RCOW) gegen Null strebt und/oder zu prüfen, ob die Spanne des resultierenden Zeitintervalls (RCOW) gegen einen Grenzwert (GW) ungleich Null strebt.

2. Verfahren nach Anspruch 1
**dadurch gekennzeichnet,**
**dass** in dem zweiten Ablauf wiederholt nicht nur für den bestimmten Messschritt (n) und bei fortschreitenden Messschritten (n+x) für den fortgeschrittenen späteren Messschritt (n+x), sondern auch für alle zwischen dem bestimmten Messschritt (n) und dem späteren Messschritt (n+x) liegenden Messschritte (n+1 ... n+x-1) von den zugehörigen Zeitversatzintervallen (COW)
• die niedrigste obere Schranke als obere Schranke eines resultierendes Zeitversatzintervalls (RCOW) festgesetzt wird und
• die höchste untere Schranke als untere Schranke des resultierenden Zeitversatzintervalls (RCOW) festgesetzt wird.

3. Verfahren nach Anspruch 1 oder 2
**dadurch gekennzeichnet,**
**dass** das Prüfen, ob die Spanne des resultierenden Zeitintervalls (RCOW) gegen einen Grenzwert (GW) ungleich Null strebt, darin besteht, zu prüfen, ob sich die Spanne des resultierenden Zeitversatzintervalls (RCOW) bei wiederholtem Festsetzen der oberen und unteren Schranke des resultierenden Zeitintervalls (RCOW) auf Dauer nicht verringert.

4. Verfahren nach einem der voranstehenden Ansprüche, **dadurch gekennzeichnet,**
**dass** für den Fall, dass die Spanne des resultierenden Zeitintervalls (RCOW) gegen einen Grenzwert (GW) strebt, ein Fehlersignal generiert wird.

5. Verfahren nach Anspruch 4,
**dadurch gekennzeichnet,**
**dass** eine Anzahl (h) von aufeinanderfolgenden Durchführungen für das Prüfen im dritten Ablauf festgelegt wird, bei denen eine Stagnation der Spanne des resultierenden Zeitversatzintervalls (RCOW) akzeptiert wird, bevor das Fehlersignal generiert wird.

6. Verfahren nach einem der voranstehenden Ansprüche,
**dadurch gekennzeichnet,**
**dass** der Zeitversatz bei einem Messschritt (n) auf Grundlage
• der Sendezeit der ersten Nachricht (N1) als Zeitdifferenz zwischen dem ersten Zeitpunkt (T1) und dem zweiten Zeitpunkt (T2) und
• der Sendezeit der zweiten Nachricht (N2) als Zeitdifferenz zwischen dem dritten Zeitpunkt (T3) und dem vierten Zeitpunkt (T4)
berechnet wird.

7. Verfahren nach einem der voranstehenden Ansprüche,
**dadurch gekennzeichnet,**
**dass** ein maximal möglicher Fehler für den Zeitversatz (Δ) bei einem Messschritt (n) unter Berücksichtigung
• einer in der ersten Kommunikationseinrichtung (K1) gemessenen Nachrichtenlaufzeit als Zeitdifferenz zwischen dem ersten Zeitpunkt (T1) und dem vierten Zeitpunkt (T4) und
• einer in der zweiten Kommunikationseinrichtung (K2) gemessenen Reaktionszeit als Zeitdifferenz zwischen dem zweiten Zeitpunkt (T2) und dem dritten Zeitpunkt (T3) berechnet wird.

8. Verfahren nach einem der voranstehenden Ansprüche,
**dadurch gekennzeichnet,**
**dass** die untere Schranke des Zeitversatzintervalls *Δ*u(n) des Messschrittes (n) berechnet wird nach der Formel: $Δ u \left(n\right) = T 3 \left(n\right) - T 4 \left(n\right)$
die obere Schranke des Zeitversatzintervalls *Δ*o(n) des Messschrittes (n) berechnet wird nach der Formel: $Δ o \left(n\right) = T 2 \left(n\right) - T 1 \left(n\right) .$

9. Verfahren nach einem der voranstehenden Ansprüche,
**dadurch gekennzeichnet,**
**dass** eine Zeitdifferenz zwischen dem früheren Messschritt (n) und dem späteren Messschritt (n+x) berechnet wird, wobei zur Ermittlung der Zeitdifferenz die gemessenen ersten Zeitpunkte (T1) oder die gemessenen zweiten Zeitpunkte (T2) oder die gemessenen dritten Zeitpunkte (T3) oder die gemessenen vierten Zeitpunkte (t4) des früheren Messschrittes und des späteren Messschrittes berücksichtigt werden.

10. Verfahren nach einem der voranstehenden Ansprüche,
**dadurch gekennzeichnet,**
**dass** für den zweiten Ablauf ein Zeitintervall (ZI) festgelegt wird, in dem alle zu betrachtenden früheren Messschritte (n) und späteren Messschritte (n+x) liegen müssen.

11. Rechenumgebung mit einer ersten Kommunikationseinrichtung (K1), aufweisend eine erste Zeitbasis (ZB1), mit einer zweiten Kommunikationseinrichtung (K2), aufweisend eine zweite Zeitbasis (ZB2) und mit einer Schnittstelle (S1, S2) zum Aufbau einer Kommunikationsverbindung zwischen der ersten Kommunikationseinrichtung und der zweiten Kommunikationseinrichtung,
**dadurch gekennzeichnet,**
**dass** die Anlage eingerichtet ist, ein Verfahren zum rechnergestützten Überwachen gemäß einem der vorgenannten Ansprüche durchzuführen.

12. Anlage nach Anspruch 11,
**dadurch gekennzeichnet,**
**dass** die Schnittstelle zum Aufbau der Kommunikationsverbindung durch eine Cloud (CLD) bereitgestellt wird.

13. Anlage nach Anspruch 11 oder 12,
**dadurch gekennzeichnet,**
**dass** die Anlage eine bahntechnische Anlage ist.

14. Computerprogrammprodukt mit Programmbefehlen zur Durchführung des Verfahrens nach einem der Ansprüche 1 - 10.

15. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.
